# NEW EUROPEAN PATENT SPECIFICATION

(11) **EP 1 473 465 B2**
(45) Date of publication and mention of the opposition decision: **01.08.2018**
(45) Mention of the grant of the patent: 14.01.2015
(21) Application number: 04251692.2
(22) Date of filing: 24.03.2004
(51) Int. Cl.: F04D 29/42, F04D 27/02

(54) **Compressor**
Verdichter
Compresseur

(30) Priority: 30.04.2003 GB 0309892
(43) Date of publication of application: 03.11.2004
(73) Proprietor: HOLSET ENGINEERING COMPANY LIMITED, Huddersfield, HD1 6RA (GB)
(72) Inventor: Nikpour, Bahram, c/o Holset Engineering Co., Ltd, Huddersfield HD1 6RA (GB); Howarth, Steven, c/o Holset Engineering Co., Ltd, Huddersfield HD1 6RA (GB); Saxton, Roy, c/o Holset Engineering Co., Ltd, Huddersfield HD1 6RA (GB); Eynon, Paul A., c/o Holset Engineering Co., Ltd, Huddersfield HD1 6RA (GB)
(74) Representative: Stevenson-Hill, Jack Patrick

(56) References cited:
- EP-A- 0 547 535
- EP-A2- 0 526 965
- WO-A1-01/09517
- GB-A- 2 319 809
- US-A- 3 504 986
- US-A- 4 375 937
- US-A- 4 743 161
- US-A- 5 295 785

## Description

The present invention relates to a compressor. In particular, the invention relates to the inlet arrangement of a centrifugal compressor such as, for example, the compressor of a turbocharger.

A compressor comprises an impeller wheel, carrying a plurality of blades (or vanes) mounted on a shaft for rotation within a compressor housing. Rotation of the impeller wheel causes gas (e.g. air) to be drawn into the impeller wheel and delivered to an outlet chamber or passage. In the case of a centrifugal compressor the outlet passage is in the form of a volute defined by the compressor housing around the impeller wheel and in the case of an axial compressor the gas is discharged axially.

In a conventional turbocharger the impeller wheel is mounted to one end of a turbocharger shaft and is rotated by an exhaust driven turbine wheel mounted within a turbine housing at the other end of the turbocharger shaft. The shaft is mounted for rotation on bearing assemblies housed within a bearing housing positioned between the compressor and turbine housings.

In some turbochargers the compressor inlet has a structure that has become known as a "a map width enhanced" (MWE) structure. An MWE structure is described for instance in EP 526 965. The inlet of such an MWE compressor comprises two coaxial tubular inlet sections, an outer inlet section or wall forming the compressor intake and inner inlet section wall defining the compressor inducer, or main inlet. The inner inlet section is shorter than the outer inlet section and has an inner surface which is an extension of a surface of an inner wall of the compressor housing which is swept by edges of the impeller wheel blades. The arrangement is such that an annular flow path is defined between the two tubular inlet sections which is open at its upstream end and which is provided with apertures at its downstream end which communicate with the inner surface of the compressor housing which faces the impeller wheel.

In operation, the pressure within the annular flow passage surrounding the compressor inducer is normally lower than atmospheric pressure and during high gas flow and high speed operation of the impeller wheel the pressure in the area swept by the impeller wheel is less than that in the annular passage. Thus, under such conditions air hows inward from the annular passage to the impeller wheel thereby increasing the amount of air reaching the impeller wheel, and increasing the maximum flow capacity of the compressor. However, as the flow through the impeller wheel drops, or as the speed of the impeller wheel drops, so the amount of air drawn into the impeller wheel through the annular passage decreases until equilibrium is reached. A further drop in the impeller wheel flow or speed results in the pressure in the area swept by the impeller wheel increasing above that within the annular passage and thus there is a reversal in the direction of air flow through the annular passage. That is, under such conditions air flows outward from the impeller wheel to the upstream end of the annular passage and is returned to the compressor intake for re-circulation. Increase in compressor gas flow or speed of the impeller wheel causes the reverse to happen, i.e. a decrease in the amount of air returned to the intake through the annular passage, followed by equilibrium, in turn followed by reversal of the air flow through the annular passage so that air is drawn in to the impeller wheel via the apertures communicating between the annular passage and the impeller.

It is well known that this arrangement stabilises the performance of the compressor increasing the maximum flow capacity and improving the surge margin, i.e. decreasing the flow at which the compressor surges. This is known as increasing the width of the compressor "map", which is a plot of the compressor characteristic. All of this is well known to the skilled person.

GB 2319809 seeks to improve on prior MWE compressor structures by extending the inlet to include a venturi. This compressor has the feature of the characterising portion of claim 1.

Compressor operation is extremely unstable under surge conditions due to large fluctuations in pressure and mass flow rate through the compressor. For many applications, such as in a turbocharger where the compressor supplies air to a reciprocating engine, these fluctuation in mass flow rate are unacceptable. As a result there is a continuing requirement to extend the useable flow range of compressors by improving the surge margin.

It is therefore an object of the present invention to provide a compressor inlet structure which improves upon the surge margin of a conventional MWE compressor.

According to the present invention there is provided a compressor for compressing a gas, the compressor comprising:
a housing defining an Inlet and an outlet;
an impeller wheel including a plurality of vanes rotatably mounted within the housing;
the housing having an inner wall defining a surface located in close proximity to radially outer edges of impeller vanes which sweep across said surface as the impeller wheel rotates about its axis;
wherein the inlet comprises:
   an outer tubular wall extending away from the impeller wheel in an upstream direction and forming a gas intake portion of the inlet;
   an inner tubular wall of inner diameter D extending away from the impeller wheel in an upstream direction within the outer tubular wall and defining an inducer portion of the Inlet
   an annular gas flow passage defined between the Inner and outer tubular walls and having an upstream end and a downstream end separated by a length L1 measured along its axis, the upstream end of the annular passage communicating with the intake or inducer portions of the inlet through at least one upstream aperture;
   at least one downstream aperture communicating between a downstream portion of the annular flow passage and said surface of the housing swept by the impeller vanes;
   the inner tubular wall extending upstream of said at least one downstream aperture by a length L2 measured along its axis;
   wherein L1/D > 0.65 and/or L2/D > 0.6. characterised in that the diameter D is constant along substantially the entire length L2 of the inner tubular wall.

The present invention provides an Improvement In surge margin by extending the length of the inner tubular wall/annular flow passage (with a conventional MWE compressor the dimensions L1/D and L2/D do not exceed 0.6 and 0.5 respectively). The most significant dimension is thought to be L2/D since this is effectively the length of the annular passage through which the air will flow at surge.

Whereas much work has previously been carried out to optimise the location of the apertures communicating between the annular flow passage and the impeller wheel, the significance of the length of the flow passage/inducer portion of the inlet has not previously been appreciated. Indeed, compressors are often designed to be compact and occupy the smallest possible space so that the length of the inlet tends to be minimised. In addition conventional casting techniques used to manufacture compressor housings favour shorter inlet dimensions. In other words the prior art has generally been moving towards shortened inlet dimensions.

Tests have shown that improvements are particularly significant when L1/D is greater than 0.9 and/or L2/D is greater than 0.97.

The compressor according to the present invention is suited for inclusion in a turbocharger.

Other preferred and advantageous features of the invention will be apparent from the following description.

A specific embodiment of the present invention will now be described, with reference to the accompanying drawings, in which:
Figure 1 is a cross-section of part of a conventional MWE compressor;
Figure 2 is a cross-section through part of an MWE compressor modified in accordance with a first embodiment of the present invention;
Figure 3 is an over-plot comparing the performance map of a conventional MWE compressor as illustrated in Figure 1 with the performance map of a compressor according to the present invention as illustrated in Figure 2; and
Figures 4a and 4b illustrate two further embodiments of the present invention.

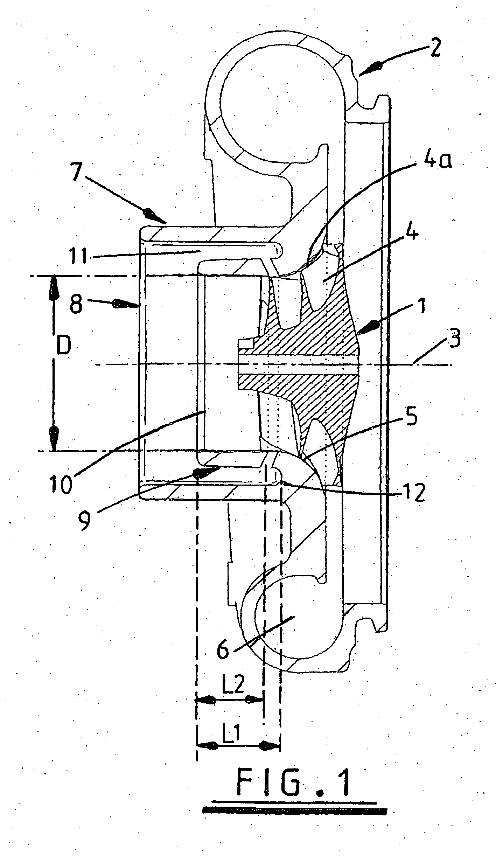

Referring to Figure 1 the illustrated MWE compressor is a centrifugal compressor comprising an impeller wheel 1 mounted within a compressor housing 2 on one end of a rotating shaft (not shown) which extends along compressor axis 3. The impeller wheel 1 has a plurality of vanes 4 each of which has an outer edge 4a which sweeps across an inner housing surface 5 when the impeller wheel 1 rotates about the axis 3. The compressor housing 2 defines an outlet volute 6 surrounding the impeller wheel, and an MWE inlet structure comprising an outer tubular wall 7 extending outwardly upstream of the impeller 1 and defining an intake 8 for gas such as air, and an inner tubular wall 9 which extends part way in to the intake 8 and defines the compressor inducer 10. The inner surface of the inner wall 9 is an upstream extension of the housing wall surface 5 which is swept by the outside edges 4a of the impeller blades 4.

An annular flow passage 11 is defined around the inducer 10 between the inner and outer walls 9 and 8 respectively. The flow passage 11 is open to the intake portion 8 of the inlet at its upstream end and is closed at its downstream end by an annular wall 12 of the housing 2, but communicates with the impeller wheel 1 via apertures 13 formed through the housing. The apertures 13 communicate between a downstream portion of the annular flow passage 11 and the inner surface 5 of the housing 2 which is swept by the outer edges 4a of the impeller wheel blades 4. The apertures 13 are typically defined by an annular slot bridged by circumferentially spaced web portions. There may for instance be four such web portions so that each aperture 13 extends approximately 90° around the impeller wheel 4. The apertures could however have other forms, for example comprising an annular array of relatively small diameter bores.

The flow passage 11 thus has an overall axial length L1 defined between its upstream end (defined where the passage 11 opens to inlet) and its downstream end (the axially innermost point of the passage 11). The annular passage also has an axial length L2 defined between its upstream end and the axial location of the apertures 13, which corresponds to the axial length of the portion of the inner tubular wall extending upstream of the apertures 13.

The conventional MWE compressor illustrated in Figure 1 operates as is described above in the introduction to this specification. In summary, when the flow rate through the compressor is high, air passes axially along the annular flow path 11 towards the impeller wheel 1, flowing to the impeller wheel 1 through the apertures 13. When the flow through the compressor is low, the direction of air flow through the annular flow passage 11 is reversed so that air passes from the impeller wheel, through the apertures 13, and through the annular flow passage 11 in an upstream direction and is reintroduced into the air intake 8 for re-circulation through the compressor. This stabilises the performance of the compressor improving both the compressor surge margin and choke flow.

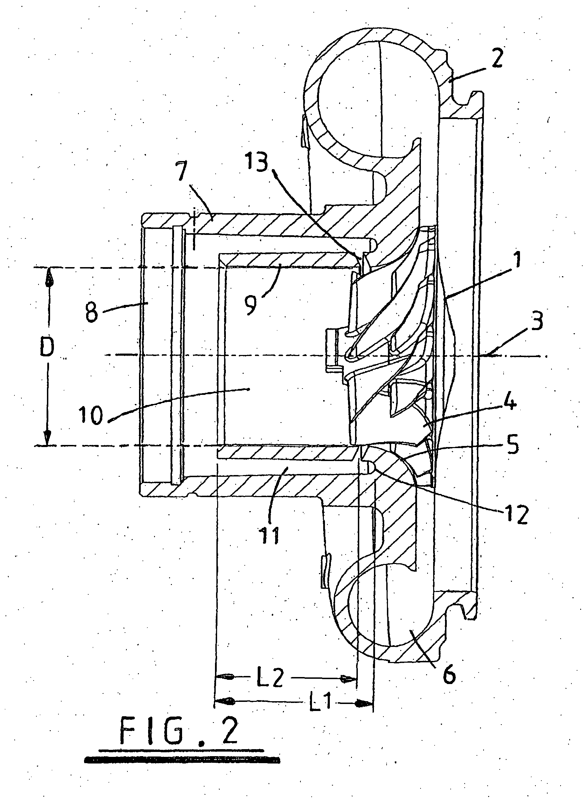

Figure 2 illustrates a modification of the conventional MWE compressor of Figure 1 in accordance with a first embodiment of the present invention. Components which correspond to those of the compressor of Figure 1 are identified by the same reference numerals as used in Figure 1. Thus, it will be seen that the illustrated compressor in accordance with the present invention is identical to the conventional MWE compressor of Figure 1 except that the axial length of the inlet is extended.

Referring to Figure 2 in more detail, the inner tubular wall 9 extends upstream of the compressor to greater extent than is conventional, and the length of the outer tubular wall 7 is similarly extended to accommodate the longer inner wall 9. Thus the overall axial length L1 of the annular flow passage 11 is extended, as is the length L2. Specifically, the present inventors have found that extending the length of the annular passage to the extent that L1/D > 0.65 and/or L2/D > 0.6, where D is the internal diameter of the inner tubular wall, greatly increases the surge margin of the compressor.

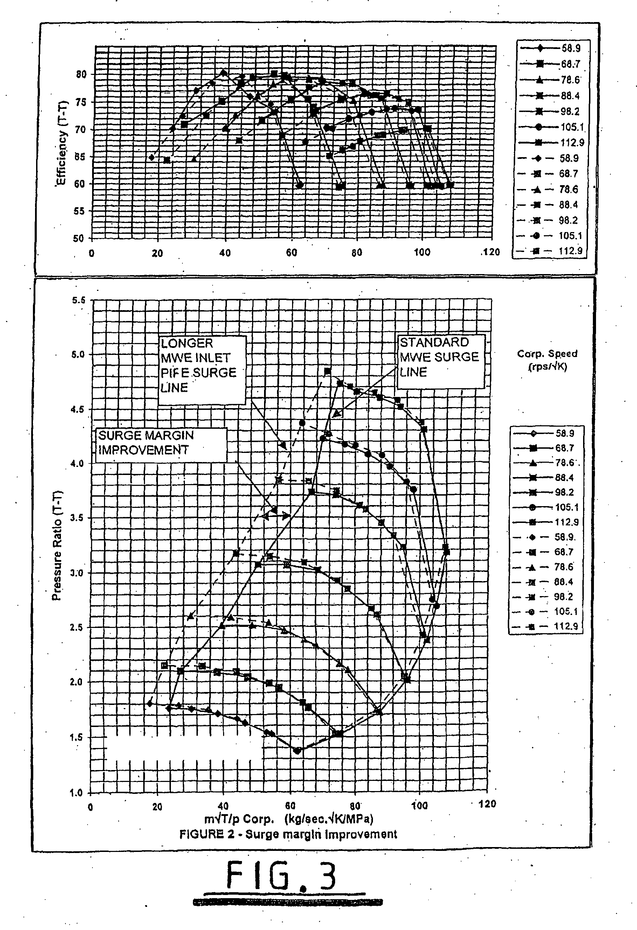

The improvement in performance provided by the present invention is illustrated by Figure 3 which is an over-plot of the performance of a compressor according to the present invention (shown in dotted lines), with L1/D = 1.41 and L2/D = 1.33, in comparison with the performance of a conventional MWE compressor (shown in solid lines) with L1/D = 0.35. The lower plot is the performance map which, as is well known, plots air flow rate through the compressor against the pressure ratio from the compressor inlet to outlet for a variety of impeller rotational speeds. The left hand line of the map represents the flow rates at which the compressor will surge for various turbocharger speeds and is known as the surge line. It can be seen the compressor according to the present invention has a significantly improved surge margin, providing up to a 25% improvement on the surge margin of the conventional MWE compressor. The maximum flow (choke flow) is largely unaffected (shown by the right hand line of the map) as is the compressor efficiency (as shown by the upper plot of Figure 3 which plots the compressor efficiency as a function of air flow). It can however be seen that the embodiment of the invention has a slightly increased pressure ratio capability compared to the conventional MWE compressor.

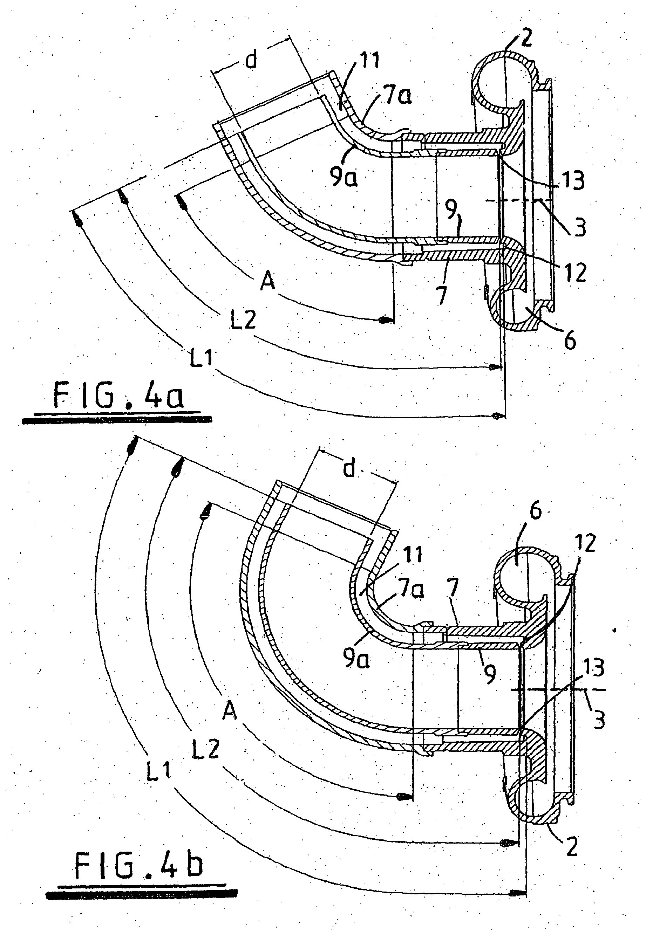

The present invention relates to the length of the inlet and other aspects of the compressor and inlet structure may be entirely conventional. Moreover, the inlet need not be straight but could have one or more bends. Examples of embodiments of the present invention having curved inlet structures are illustrated in Figures 4a and 4b (which show the housing with impeller wheel omitted). In each case the inner and outer tubular walls 9 and 7 have extension portions 9a and 7a respectively which have axes that curve away from the axis 3 of the impeller (not shown). The two structures differ from each other only in the length and angle of curvature A of the curved portions 7a and 9a. With such embodiments the lengths L1 and L2 are measured along the axis of the tubular portions 7/7a and 9/9a which in these examples comprise both straight and curved portions. In other embodiments the lengths may be entirely curved.

Compressors in accordance with the present invention may have many applications and in particular are suitable for incorporation in turbochargers.

## Claims

1. A compressor for compressing a gas, the compressor comprising:
a housing defining an inlet and an outlet;
an impeller wheel including a plurality of vanes rotatably mounted within the housing;
the housing having an inner wall defining a surface located in close proximity to radially outer edges of impeller vanes which sweep across said surface as the impeller wheel rotates about its axis;
wherein the inlet comprises:
an outer tubular wall extending away from the impeller wheel in an upstream direction and forming a gas intake portion of the inlet;
an inner tubular wall of inner diameter D extending away from the impeller wheel in an upstream direction within the outer tubular wall and defining an inducer portion of the inlet;
an annular gas flow passage defined between the inner and outer tubular walls and having an upstream end and a downstream end separated by a length L1 measured along its axis, the upstream end of the annular passage communicating with the intake or inducer portions of the inlet through at least one upstream aperture;
at least one downstream aperture communicating between a downstream portion of the annular flow passage and said surface of the housing swept by the impeller vanes;
the inner tubular wall extending upstream of said at least one downstream aperture by a length L2 measured along its axis;
wherein L1/D > 0.65 and/or L2/D > 0.6;
**characterised in that** the diameter D is constant along substantially the entire length L2 of the inner tubular wall.

2. A compressor according to claim 1, where in L1/D>0.9 and/or L2/D>0.97

3. A compressor according to claim 1 or claim 2, wherein the annular flow passage is open at its upstream end, such that said at least one upstream aperture is an annular opening defined at the upstream end of the inner tubular wall between the inner and outer tubular walls.

4. A compressor according to any preceding claim, wherein the inner tubular wall and the annular passage wall are co-axial having an axis which is a continuation of the impeller wheel axis.

5. A compressor according to any preceding claim, wherein the lengths L1 and L2 are entirely straight.

6. A compressor according to any preceding claim, wherein the lengths L1 and L2 are at least in part curved.

## Patentansprüche

1. Kompressor zum Komprimieren eines Gases, wobei der Kompressor umfasst:
ein Gehäuse, das einen Einlass und einen Auslass definiert;
ein Laufrad, das eine Vielzahl von Schaufeln einschließt, das drehbar innerhalb des Gehäuses angebracht ist;
wobei das Gehäuse eine innere Wand aufweist, die eine Fläche definiert, die in unmittelbarer Nähe zu radial äußeren Kanten der Laufradschaufeln angeordnet ist, die über die Fläche streifen, während sich das Laufrad um seine Achse dreht;
worin der Einlass umfasst:
eine äußere rohrförmige Wand, die sich vom Laufrad weg in einer stromaufwärts gelegenen Richtung erstreckt und einen Gaseintrittsabschnitt des Einlasses bildet,
eine innere rohrförmige Wand mit einem inneren Durchmesser D, die sich vom Laufrad weg in einer stromaufwärts gelegenen Richtung innerhalb der äußeren rohrförmigen Wand erstreckt und einen Einlaufabschnitt des Einlasses definiert;
einen ringförmigen Gasströmungskanal, der zwischen der inneren und der äußeren rohrförmigen Wand definiert ist und ein stromaufwärts gelegenes Ende und ein stromabwärts gelegenes Ende aufweist, die durch eine entlang seiner Achse gemessene Länge L1 getrennt sind, wobei das stromaufwärts gelegene Ende des ringförmigen Kanals mit dem Eintritts- oder Einlaufabschnitt des Einlasses durch mindestens eine stromaufwärts gelegene Öffnung in Verbindung steht;
mindestens eine stromabwärts gelegene Öffnung, die zwischen einem stromabwärts gelegenen Abschnitt des ringförmigen Strömungskanals und der Fläche des Gehäuses, die durch die Laufradschaufeln gestreift wird, eine Verbindung bildet;
wobei sich die innere rohrförmige Wand stromaufwärts von der mindestens einen stromabwärts gelegenen Öffnung über eine Länge L2, die entlang ihrer Achse gemessen wird, erstreckt;
wobei L1/D > 0,65 und/oder L2/D > 0,6;
**dadurch gekennzeichnet, dass** der Durchmesser D entlang im Wesentlichen der gesamten Länge L2 der inneren rohrförmigen Wand konstant ist.

2. Kompressor nach Anspruch 1, wobei L1/D > 0,9 und/oder L2/D > 0,97.

3. Kompressor nach Anspruch 1 oder Anspruch 2, worin der ringförmige Strömungskanal an seinem stromaufwärtsgelegenen Ende offen ist, sodass die mindestens eine stromaufwärts gelegene Öffnung eine ringförmige Öffnung ist, die am stromaufwärts gelegenen Ende der inneren rohrförmigen Wand zwischen der inneren und der äußeren rohrförmigen Wand definiert ist.

4. Kompressor nach einem der vorangehenden Ansprüche, worin die innere rohrförmige Wand und die Wand des ringförmigen Kanals koaxial sind, wobei sie eine Achse aufweisen, die eine Fortsetzung der Laufradachse ist.

5. Kompressor nach einem der vorangehenden Ansprüche, worin die Längen L1 und L2 vollkommen gerade sind.

6. Kompressor nach einem der vorangehenden Ansprüche, worin die Längen L1 und L2 mindestens teilweise gekrümmt sind.

## Revendications

1. Compresseur pour comprimer un gaz, le compresseur comprenant :
un boîtier définissant un orifice d'entrée et un orifice de sortie ;
une roue à hélices incluant une pluralité d'aubes montée rotativement dans le boîtier ;
le boîtier ayant une paroi interne définissant une surface située à proximité immédiate des bords radialement externes des aubes d'hélices qui balayent ladite surface lorsque la roue à hélices tourne sur son axe ;
dans lequel l'orifice d'entrée comprend :
une paroi tubulaire externe s'étendant à l'écart de la roue à hélices dans une direction en amont et formant une partie d'entrée du gaz de l'orifice d'entrée ;
une paroi tubulaire interne d'un diamètre interne D s'étendant à l'écart de la roue à hélices dans une direction en amont dans la paroi tubulaire externe et définissant une partie d'inducteur de l'orifice d'entrée ;
un passage annulaire pour flux de gaz défini entre les parois tubulaires interne et externe et ayant une extrémité en amont et une extrémité en aval séparées par une longueur L1 mesurée le long de son axe, l'extrémité en amont du passage annulaire communiquant avec les parties d'entrée ou d'inducteur de l'orifice d'entrée à travers au moins une ouverture en amont ;
au moins une ouverture en aval communiquant entre une partie en aval du passage annulaire pour flux et ladite surface du boîtier balayée par les aubes de l'hélice ;
la paroi tubulaire interne s'étendant en amont de ladite au moins une ouverture en aval sur une longueur L2 mesurée le long de son axe ;
où L1/D > 0,65 et/ou L2/D > 0,6 ;
**caractérisé en ce que** le diamètre D est constant le long de substantiellement la longueur entière L2 de la paroi tubulaire interne.

2. Compresseur selon la revendication 1, dans lequel L1/D > 0,9 et/ou L2/D > 0,97.

3. Compresseur selon la revendication 1 ou la revendication 2, dans lequel le passage annulaire pour flux est ouvert à son extrémité en amont, de sorte que ladite au moins une ouverture en amont est une ouverture annulaire définie au niveau de l'extrémité en amont de la paroi tubulaire interne entre les parois tubulaires interne et externe.

4. Compresseur selon l'une quelconque des revendications précédentes, dans lequel la paroi tubulaire interne et la paroi de passage annulaire sont coaxiales et ont un axe qui est une continuation de l'axe de la roue à hélices.

5. Compresseur selon l'une quelconque des revendications précédentes, dans lequel les longueurs L1 et L2 sont entièrement droites.

6. Compresseur selon l'une quelconque des revendications précédentes, dans lequel les longueurs L1 et L2 sont au moins en partie courbées.
